# EUROPÄISCHE PATENTSCHRIFT

(11) **EP 1 521 922 B1**
(45) Veröffentlichungstag und Bekanntmachung des Hinweises auf die Patenterteilung: **10.09.2008**
(21) Anmeldenummer: 03763712.1
(22) Anmeldetag: 05.07.2003
(51) Int. Cl.: F16H 3/66

(54) **MEHRSTUFENGETRIEBE**
MULTI-STAGE TRANSMISSION
BOITE DE VITESSES A PLUSIEURS ETAGES

(30) Priorität: 11.07.2002 DE 10231350
(43) Veröffentlichungstag der Anmeldung: 13.04.2005
(73) Patentinhaber: ZF FRIEDRICHSHAFEN Aktiengesellschaft, 88038 Friedrichshafen (DE)
(72) Erfinder: GUMPOLTSBERGER, Gerhard, 88045 Friedrichshafen (DE)
(86) Internationale Anmeldenummer: PCT/EP2003/007214
(87) Internationale Veröffentlichungsnummer: WO 2004/007994

(56) Entgegenhaltungen:
- DE-A- 19 949 507
- US-A1- 2003 083 174
- US-B1- 6 425 841

## Beschreibung

Die vorliegende Erfindung betrifft ein Mehrstufengetriebe in Planetenbauweise, insbesondere ein Automatgetriebe für ein Kraftfahrzeug gemäß dem Oberbegriff des Patentanspruchs 1.

Automatgetriebe, insbesondere für Kraftfahrzeuge, umfassen nach dem Stand der Technik Planetensätze, die mittels Reibungs- bzw. Schaltelementen wie etwa Kupplungen und Bremsen geschaltet werden und üblicherweise mit einem einer Schlupfwirkung unterliegenden und wahlweise mit einer Überbrückungskupplung versehenen Anfahrelement wie etwa einem hydrodynamischen Drehmomentwandler oder einer Strömungskupplung verbunden sind.

Ein derartiges Getriebe geht aus der EP 0 434 525 A1 hervor. Es umfasst im wesentlichen eine Antriebswelle und eine Abtriebswelle, die parallel zueinander angeordnet sind, einen konzentrisch zur Abtriebswelle angeordneten Doppelplanetenradsatz und fünf Schaltelemente in der Form von drei Kupplungen und zwei Bremsen, deren wahlweise Sperrung jeweils paarweise die verschiedenen Gangübersetzungen zwischen der Antriebswelle und der Abtriebswelle bestimmt. Hierbei weist das Getriebe einen Vorschaltradsatz und zwei Leistungswege auf, so dass durch das selektive paarweise Eingreifen der fünf Schaltelemente sechs Vorwärtsgänge erzielt werden.

Hierbei werden bei dem ersten Leistungsweg zwei Kupplungen zur Übertragung des Drehmomentes vom Vorschaltradsatz zu zwei Elementen des Doppelplanetenradsatzes benötigt. Diese sind in Kraftflussrichtung im wesentlichen hinter dem Vorschaltradsatz in Richtung Doppelplanetenradsatz angeordnet. Bei dem zweiten Leistungsweg ist eine weitere Kupplung vorgesehen, die diesen mit einem weiteren Element des Doppelplanetenradsatzes lösbar verbindet. Hierbei sind die Kupplungen derart angeordnet, dass der Innenlammelenträger den Abtrieb bildet.

Des weiteren ist aus der Druckschrift US 6,139,463 ein kompaktes Mehrstufengetriebe in Planetenbauweise, insbesondere für ein Kraftfahrzeug bekannt, welches zwei Planetenradsätze und einen Vorschaltradsatz sowie drei Kupplungen und zwei Bremsen aufweist. Bei diesem bekannten Mehrstufengetriebe sind bei einem ersten Leistungsweg zwei Kupplungen C-1 und C-3 zum Übertragen des Drehmoments vom Vorschaltradsatz zu den beiden Planetenradsätzen vorgesehen. Hierbei ist der Außenlamellenträger bzw. die Zylinder- bzw. Kolben- und Druckausgleichsseite der Kupplung C-3 mit einer ersten Bremse B-1 verbunden. Zudem ist der Innenlamellenträger der dritten Kupplung C-3 mit der Zylinder- bzw. Kolben- und Druckausgleichsseite der ersten Kupplung C-1 verbunden, wobei der Innenlamellenträger der ersten Kupplung C-1 abtriebsseitig angeordnet ist und mit einem Sonnenrad des dritten Planetenradsatzes verbunden ist.

Des weiteren ist aus der gattungsgemäßen DE 199 49 507 A1 der Anmelderin ein Mehrstufengetriebe bekannt, bei dem an der Antriebswelle zwei nicht schaltbare Vorschaltradsätze vorgesehen sind, die ausgangsseitig zwei Drehzahlen erzeugen, die neben der Drehzahl der Antriebswelle wahlweise auf einen auf die Abtriebswelle wirkenden, schaltbaren Doppelplanetenradsatz durch selektives Schließen der verwendeten Schaltelemente derart schaltbar sind, dass zum Umschalten von einem Gang in den jeweils nächst folgenden höheren oder niedrigeren Gang von den beiden gerade betätigten Schaltelementen jeweils nur ein Schaltelement zu- oder abgeschaltet werden muss.

Des weiteren ist aus der DE 199 12 480 A1 ein automatisch schaltbares Kraftfahrzeuggetriebe mit drei Einsteg-Planetensätzen sowie drei Bremsen und zwei Kupplungen zum Schalten von sechs Vorwärtsgängen und einem Rückwärtsgang und mit einer Antriebs- sowie einer Abtriebswelle bekannt. Das automatisch schaltbare Kraftfahrzeuggetriebe ist derart ausgebildet, dass die Antriebswelle direkt mit dem Sonnenrad des zweiten Planetensatzes verbunden ist und dass die Antriebswelle über die erste Kupplung mit dem Sonnenrad des ersten Planetensatzes und/oder über die zweite Kupplung mit dem Steg des ersten Planetensatzes verbindbar ist. Zusätzlich oder alternativ ist das Sonnenrad des ersten Planetensatzes über die erste Bremse mit dem Gehäuse des Getriebes und/oder der Steg des ersten Planetensatzes über die zweite Bremse mit dem Gehäuse und/oder dem Sonnenrad des dritten Planetensatzes über die dritte Bremse mit dem Gehäuse verbindbar.

Der vorliegenden Erfindung liegt die Aufgabe zugrunde, ein Mehrstufengetriebe der eingangs genannten Art vorzuschlagen, bei dem der Bauaufwand optimiert wird und zudem der Wirkungsgrad in den Hauptfahrgängen hinsichtlich der Schlepp- und Verzahnungsverluste verbessert wird. Zudem sollen bei dem erfindungsgemäßen Mehrstufengetriebe geringe Momente auf die Schaltelemente und Planetensätze wirken sowie die Drehzahlen der Wellen, Schaltelemente und Planetensätze möglicht gering gehalten werden. Des weiteren soll die Anzahl der Gänge sowie die Getriebespreizung erhöht werden.

Diese Aufgabe wird erfindungsgemäß durch die Merkmale des Patentanspruches 1 gelöst. Weitere Vorteile und vorteilhafte Ausgestaltungen gehen aus den Unteransprüchen hervor.

Demnach wird ein erfindungsgemäßes Mehrstufengetriebe in Planetenbauweise vorgeschfagen, welches eine Antriebswelle und eine Abtriebswelle aufweist, welche in einem Gehäuse angeordnet sind. Des weiteren sind zumindest drei Einstegplanetensätze, mindestens sieben drehbare Wellen sowie zumindest sechs Schaltelemente, umfassend Bremsen und Kupplungen, vorgesehen, deren selektives Eingreifen verschiedene Übersetzungsverhältnisse zwischen der Antriebswelle und der Abtriebswelle bewirkt, sodass vorzugsweise acht Vorwärtsgänge und zwei Rückwärtsgänge realisierbar sind.

Gemäß der vorliegenden Erfindung ist bei dem Mehrstufenschaltgetriebe vorgesehen, dass der Antrieb durch eine erste Welle erfolgt, welche ständig mit einem ersten Element des ersten Planetensatzes verbunden ist und dass der Abtrieb über eine zweite Welle erfolgt, welche mit dem Hohlrad des zweiten Planetensatzes und dem Hohlrad des dritten Planetensatzes verbunden ist. Des weiteren ist bei dem erfindungsgemäßen Mehrstufengetriebe vorgesehen, dass eine dritte Welle ständig mit einem zweiten Element des ersten Planetensatzes verbunden ist, dass eine vierte Welle ständig mit dem Steg des zweiten Planetensatzes und dem Steg des dritten Planetensatzes verbunden ist, dass eine fünfte Welle ständig mit dem Hohlrad des ersten Planetensatzes verbunden ist, dass eine sechste Welle ständig mit dem Sonnenrad des zweiten Planetensatzes verbunden ist und dass eine weitere, siebte Welle ständig mit dem Sonnenrad des dritten Planetensatzes verbunden ist, wobei die Planetensätze mit Wellen und Schaltelementen gekoppelt sind.

Im Rahmen einer bevorzugten Ausführungsform ist die Antriebswelle mit dem Sonnenrad des ersten Planetensatzes und die dritte Welle mit dessen Steg verbunden, wobei eine weitere Ausführungsform eine Vertauschung dieser Bindungen vorsieht, so dass die Antriebswelle mit dem Steg des ersten Planetensatzes und die dritte Welle mit dem Sonnenrad des ersten Planetensatzes verbunden ist.

Gemäß der Erfindung sind der erste und der dritte Planetensatz als Plus-Planetensätze ausgebildet; der zweite Planetensatz ist ein Minus-Planetensatz.

Durch die erfindungsgemäße Ausgestaltung des Mehrstufengetriebes ergeben sich geeignete Übersetzungen sowie eine erhebliche Erhöhung der Gesamtspreizung des Mehrstufengetriebes, wodurch eine Verbesserung des Fahrkomforts und eine signifikante Verbrauchsabsenkung bewirkt werden.

Das erfindungsgemäße Mehrstufengetriebe eignet sich für jedes Kraftfahrzeug, insbesondere für Personenkraftfahrzeuge und für Nutzkraftfahrzeuge, wie z. B. Lastkraftwagen, Busse, Baufahrzeuge, Schienenfahrzeuge, Gleiskettenfahrzeuge und dergleichen.

Darüber hinaus wird mit dem erfindungsgemäßen Mehrstufengetriebe durch eine geringe Anzahl an Schaltelementen, vorzugsweise vier Kupplungen und zwei Bremsen, der Bauaufwand erheblich reduziert. In vorteilhafter Weise ist es mit dem erfindungsgemäßen Mehrstufengetriebe möglich, ein Anfahren mit einem hydrodynamischen Wandler, einer externen Anfahrkupplung oder auch mit sonstigen geeigneten externen Anfahrelementen durchzuführen. Es ist auch denkbar, einen Anfahrvorgang mit einem im Getriebe integrierten Anfahrelement zu ermöglichen. Vorzugsweise eignet sich ein Schaltelement, welches im ersten Gang und in den Rückwärtsgängen betätigt wird.

Darüber hinaus ergibt sich bei dem erfindungsgemäßen Mehrstufengetriebe ein guter Wirkungsgrad in den Hauptfahrgängen bezüglich der Schlepp- und Verzahnungsverluste.

Des weiteren liegen geringe Momente in den Schaltelementen und in den Planetensätzen des Mehrstufengetriebes vor, wodurch der Verschleiß bei dem Mehrstufengetriebe in vorteilhafter Weise reduziert wird. Ferner wird durch die geringen Momente eine entsprechend geringe Dimensionierung ermöglicht, wodurch der benötigte Bauraum und die entsprechenden Kosten reduziert werden. Darüber hinaus liegen auch geringe Drehzahlen bei den Wellen, den Schaltelementen und den Planetensätzen vor.

Außerdem ist das erfindungsgemäße Getriebe derart konzipiert, dass eine Anpassbarkeit an unterschiedliche Triebstrangausgestaltungen sowohl in Kraftflussrichtung als auch in räumlicher Hinsicht ermöglicht wird.

Die Erfindung wird im folgenden anhand der Zeichnungen beispielhaft näher erläutert.

In diesen stellen dar:
- Fig. 1: eine schematische Ansicht einer bevorzugten Ausführungsform eines erfindungsgemäßen Mehrstufengetriebes;
- Fig. 2: eine schematische Ansicht einer weiteren bevorzugten Ausführungsform eines erfindungsgemäßen Mehrstufengetriebes und
- Fig. 3: ein Schaltschema für das erfindungsgemäße Mehrstufengetriebe gemäß Fig. 1 und Fig. 2.

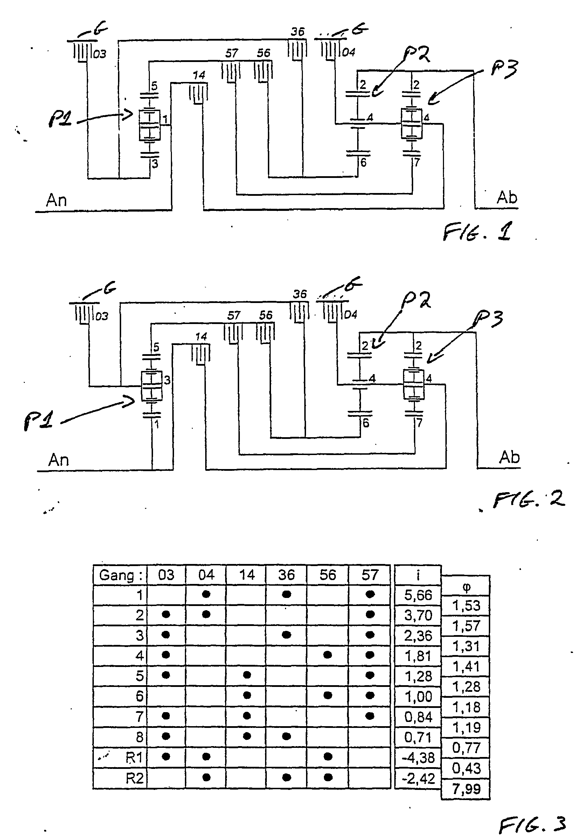

In Fig. 1 ist das erfindungsgemäße Mehrstufengetriebe mit einer Antriebswelle 1 (An) und einer Abtriebswelle 2 (Ab) dargestellt, welche in einem Gehäuse G angeordnet sind. Es sind drei Einsteg-Planetensätze P1, P2, P3 vorgesehen. Hierbei sind der erste Planetensatz P1 und der dritte Planetensatz P3 als Plus-Planetensätze ausgebildet; der zweite Planetensatz P2 ist gemäß der Erfindung als Minus-Planetensatz ausgebildet. Es ist auch möglich, dass der zweite Planetensatz P2 und der dritte Planetensatz P3 als Ravigneaux-Planetensatz mit einem gemeinsamen Steg und einem gemeinsamen Hohlrad zusammengefasst sind.

Wie aus den Fig. 1 und 2 ersichtlich, sind lediglich sechs Schaltelemente, nämlich zwei Bremsen 03, 04 und vier Kupplungen 14, 36, 56 und 57 vorgesehen.

Mit den Schaltelementen ist ein selektives Schalten von acht Vorwärtsgängen und zwei Rückwärtsgängen realisierbar. Das erfindungsgemäße Mehrstufengetriebe weist insgesamt sieben drehbare Wellen auf, nämlich die Wellen 1, 2, 3, 4, 5, 6 und 7.

Erfindungsgemäß ist bei dem Mehrstufengetriebe gemäß Fig. 1 vorgesehen, dass der Antrieb durch die Welle 1 erfolgt, welche ständig mit dem Steg des ersten Planetensatzes P1 verbunden ist. Der Abtrieb erfolgt über die Welle 2, welche ständig mit dem Hohlrad des zweiten Planetensatzes P2 und dem Hohlrad des dritten Planetensatzes P3 verbunden ist. Des weiteren ist die Welle 3 ständig mit dem Sonnenrad des ersten Planetensatzes P1 verbunden und die Welle 4 ist ständig mit dem Steg des zweiten Planetensatzes P2 und dem Steg des dritten Planetensatzes P3 verbunden. Darüber hinaus ist die Welle 5 ständig mit dem Hohlrad des ersten Planetensatzes P1 verbunden. Die weitere drehbare Welle 6 ist erfindungsgemäß ständig mit dem Sonnenrad des zweiten Planetensatzes P2 und die Welle 7 mit dem Sonnenrad des dritten Planetensatzes P3 verbunden.

Bei dem erfindungsgemäßen Mehrstufengetriebe ist die Welle 3 durch die Bremse 03 und die Welle 4 durch die Bremse 04 an das Gehäuse G ankoppelbar. Die Kupplung 14 verbindet die Welle 1 und die Welle 4 lösbar miteinander; die Welle 3 und die Welle 6 sind über die Kupplung 36 lösbar miteinander verbunden. Des weiteren verbindet die Kupplung 56 die Wellen 5 und 6 und die Kupplung 57 die Wellen 5 und 7 lösbar miteinander.

In Fig. 2 ist eine weitere Ausführungsform des erfindungsgemäßen Mehrstufengetriebes gezeigt. Der Unterschied zu der Ausführungsform gemäß Fig. 1 besteht darin, dass die Antriebswelle 1 mit dem Sonnenrad des ersten Planetensatzes P1 verbunden ist und dass die Welle 3 mit dem Steg des ersten Planetensatzes P1 verbunden ist.

In Fig. 3 ist ein Schaltschema des erfindungsgemäßen Mehrstufengetriebes gemäß den Fig. 1 und 2 dargestellt. Dem Schaltschema können die jeweiligen Übersetzungen i der einzelnen Gangstufen und die daraus zu bestimmenden Stufensprünge ϕ beispielhaft entnommen werden. Des weiteren kann dem Schaltschema entnommen werden, dass bei sequentieller Schaltweise Doppelschaltungen vermieden werden, da zwei benachbarte Gangstufen jeweils zwei Schaltelemente gemeinsam benutzen.

Für die ersten sieben Vorwärtsgänge ist die Kupplung 57 ständig geschlossen. Zusätzlich werden für den ersten Gang die Bremse 04 und die Kupplung 36, für den zweiten Gang die Bremsen 03 und 04, für den dritten Gang die Bremse 03 und die Kupplung 36, für den vierten Gang die Bremse 03 und die Kupplung 56, für den fünften Gang die Bremse 03 und die Kupplung 14, für den sechsten Gang die Kupplungen 14 und 56 und für den siebten Gang die Bremse 03 und die Kupplung 14 aktiviert. Für den achten Gang werden die Bremse 03 und die Kupplungen 14 und 36 geschlossen. Der erste Rückwärtsgang R1 erfordert die Schaltelemente 03, 04 und 56; für den zweiten Rückwärtsgang R2 sind die Schaltelemente 04, 36 und 56 aktiviert.

Gemäß der Erfindung ist es möglich, an jeder geeigneten Stelle des Mehrstufengetriebes zusätzliche Freiläufe vorzusehen, beispielsweise zwischen einer Welle und dem Gehäuse oder um zwei Wellen gegebenenfalls zu verbinden.

Zudem ist es durch die erfindungsgemäße Bauweise möglich, Antrieb und Abtrieb vorzugsweise für Quer-, Front-Längs-, Heck-Längs- oder Allradanordnungen auf der gleichen Seite des Getriebes bzw. des Gehäuses anzuordnen. Auf der Antriebsseite oder auf der Abtriebsseite können zudem ein Achsdifferential und/oder ein Verteilerdifferential angeordnet werden.

Im Rahmen einer vorteilhaften Weiterbildung kann die Antriebswelle 1 durch ein Kupplungselement von einem Antriebs-Motor nach Bedarf getrennt werden, wobei als Kupplungselement ein hydrodynamischer Wandler, eine hydraulische Kupplung, eine trockene Anfahrkupplung, eine nasse Anfahrkupplung, eine Magnetpulverkupplung oder eine Fliehkraftkupplung einsetzbar sind. Es ist auch möglich, ein derartiges Anfahrelement in Kraftflussrichtung hinter dem Getriebe anzuordnen, wobei in diesem Fall die Antriebswelle 1 ständig mit der Kurbelwelle des Motors verbunden ist. Das Anfahren kann gemäß der Erfindung auch mittels eines Schaltelements des Getriebes erfolgen. Bevorzugt kann als Anfahrelement die Bremse 04, die sowohl im ersten Vorwärtsgang als auch im ersten Rückwärtsgang aktiviert ist, verwendet werden.

Das erfindungsgemäße Mehrstufengetriebe ermöglicht außerdem die Anordnung eines Torsionsschwingungsdämpfers. zwischen Motor und Getriebe.

Im Rahmen einer weiteren, nicht dargestellten Ausführungsform der Erfindung kann auf jeder Welle, bevorzugt auf der Antriebswelle 1 oder der Abtriebswelle 2, eine verschleißfreie Bremse, wie z. B. ein hydraulischer oder elektrischer Retarder oder dergleichen, angeordnet sein, welches insbesondere für den Einsatz in Nutzkraftfahrzeugen von besonderer Bedeutung ist. Des weiteren kann zum Antrieb von zusätzlichen Aggregaten auf jeder Welle, bevorzugt auf der Antriebswelle 1 oder der Abtriebswelle 2, ein Nebenabtrieb vorgesehen sein.

Die eingesetzten Schaltelemente können als lastschaltende Kupplungen oder Bremsen ausgebildet sein. Insbesondere können kraftschlüssige Kupplungen oder Bremsen, wie z. B. Lamellenkupplungen, Bandbremsen und/oder Konuskupplungen, verwendet werden. Des weiteren können als Schaltelemente auch formschlüssige Bremsen und/oder Kupplungen, wie z. B. Synchronisierungen oder Klauenkupplungen eingesetzt werden.

Ein weiterer Vorteil des hier vorgestellten Mehr-stufengetriebes besteht darin, dass auf jeder Welle als Generator und/oder als zusätzliche Antriebsmaschine eine elektrische Maschine anbringbar ist.

Die funktionalen Merkmale der Ansprüche können konstruktiv auf verschiedenartigste Weise ausgebildet sein. Der Einfachheit halber sind diese konstruktiven Ausbildungsmöglichkeiten nicht explizit beschrieben. Selbstverständlich fällt jedoch jede konstruktive Ausbildung der Erfindung, insbesondere jede räumliche Anordnung der Planetensätze und der Schaltelemente an sich sowie zueinander und soweit technisch sinnvoll, unter den Schutzumfang der Ansprüche.

### Bezugszeichen

- 1: Welle
- 2: Welle
- 3: Welle
- 4: Welle
- 5: Welle
- 6: Welle
- 7: Welle
- 03: Bremse
- 04: Bremse
- 14: Kupplung
- 36: Kupplung
- 56: Kupplung
- 57: Kupplung

- P1: Planetensatz
- P2: Planetensatz
- P3: Planetensatz
- An: Antrieb
- Ab: Abtrieb
- i: Übersetzung
- ϕ: Stufensprung
- G: Gehäuse

## Patentansprüche

1. Mehrstufengetriebe in Planetenbauweise, insbesondere ein Automatgetriebe für ein Kraftfahrzeug, umfassend eine Antriebswelle (1) und eine Abtriebswelle (2), welche in einem Gehäuse (G) angeordnet sind, drei Einsteg-Planetensätze (P1, P2, P3), mindestens sieben drehbare Wellen (1, 2, 3, 4, 5, 6, 7) sowie mindestens sechs Schaltelemente (03, 04, 14, 36, 56, 57), umfassend Bremsen und Kupplungen, deren selektives Eingreifen verschiedene Übersetzungsverhältnisse zwischen der Antriebswelle (1) und der Abtriebswelle (2) bewirkt, sodass acht Vorwärtsgänge und zwei Rückwärtsgänge realisierbar sind, der Antrieb durch eine erste Welle (1) erfolgt, welche ständig mit einem Element des ersten Planetensatzes (P1) verbunden ist, dass der Abtrieb über eine zweite Welle (2) erfolgt, welche ständig mit dem Hohlrad des dritten Planetensatzes (P3) verbunden ist, dass eine dritte Welle (3) ständig mit einem zweiten Element des ersten Planetensatzes (P1) verbunden ist, dass eine vierte Welle (4) ständig mit dem Steg des zweiten Planetensatzes (P2) verbunden ist, dass eine fünfte Welle (5) ständig mit dem Hohlrad des ersten Planetensatzes (P1) verbunden ist, dass eine sechste Welle (6) ständig mit dem Sonnenrad des zweiten Planetensatzes (P2) verbunden ist, dass eine siebte Welle (7) ständig mit dem Sonnenrad des dritten Planetensatzes (P3) verbunden ist, eine Kupplung (14) die erste Welle (1) und die vierte Welle (4) lösbar miteinander verbindet, eine Kupplung (36) die dritte Welle (3) und die sechste Welle (6) lösbar miteinander verbindet, und wobei eine Kupplung (57) die fünfte Welle (5) und die siebte Welle (7) lösbar miteinander verbindet, **dadurch gekennzeichnet, dass** die zweite welle ständig mit dem Hohlrad des zweiten Planetensatzes (P2) verbunden ist, die vierte welle ständig mit dem Steg des dritten Planetensatzes (P3) verbunden ist, wobei die dritte Welle (3) durch eine Bremse (03) an das Gehäuse (G) ankoppelbar ist, die vierte Welle (4) durch eine zweite Bremse (04) an das Gehäuse (G) ankoppelbar ist, und eine Kupplung (56) die fünfte Welle (5) und die sechste Welle (6) lösbar miteinander verbindet.

2. Mehrstufengetriebe nach Anspruch 1, **dadurch gekennzeichnet, dass** die erste Welle (1) ständig mit dem Sonnenrad des ersten Planetensatzes (P1) verbunden ist und dass die dritte Welle (3) ständig mit dem Steg des ersten Planetensatzes (P1) verbunden ist.

3. Mehrstufengetriebe nach Anspruch 1, **dadurch gekennzeichnet, dass** die erste Welle (1) ständig mit dem Steg des ersten Planetensatzes (P1) verbunden ist und dass die dritte Welle (3) ständig mit dem Sonnenrad des ersten Planetensatzes (P1) verbunden ist.

4. Mehrstufengetriebe nach einem der vorstehenden Ansprüche, **dadurch gekennzeichnet, dass** der erste Planetensatz (P1) und der dritte Planetensatz (P3) als Plus-Planetensätze ausgebildet sind und dass der zweite Planetensatz (P2) als Minus-Planetensatz ausgebildet ist.

5. Mehrstufengetriebe nach einem der vorstehenden Ansprüche, **dadurch gekennzeichnet, dass** an jeder geeigneten Stelle zusätzliche Freiläufe einsetzbar sind.

6. Mehrstufengetriebe nach Anspruch 5, **dadurch gekennzeichnet, dass** die Freiläufe zwischen den Wellen (1, 3, 3, 4, 5, 6, 7) und dem Gehäuse (G) vorgesehen sind.

7. Mehrstufengetriebe nach einem der vorstehenden Ansprüche, **dadurch gekennzeichnet, dass** Antrieb und Abtrieb auf der gleichen Seite des Gehäuses vorgesehen sind.

8. Mehrstufengetriebe nach einem der vorstehenden Ansprüche, **dadurch gekennzeichnet, dass** ein Achs- und/oder ein Verteilerdifferential auf der Antriebsseite oder der Abtriebsseite angeordnet ist.

9. Mehrstufengetriebe nach einem der vorstehenden Ansprüche, **dadurch gekennzeichnet, dass** die Antriebswelle (1) durch ein Kupplungselement von einem Antriebs-Motor trennbar ist.

10. Mehrstufengetriebe nach Anspruch 9, **dadurch gekennzeichnet, dass** als Kupplungselement ein hydrodynamischer Wandler, eine hydraulische Kupplung, eine trockene Anfahrkupplung, eine nasse Anfahrkupplung, eine Magnetpulverkupplung oder eine Fliehkraftkupplung vorgesehen ist.

11. Mehrstufengetriebe nach einem der vorstehenden Ansprüche, **dadurch gekennzeichnet, dass** in Kraftflussrichtung hinter dem Getriebe ein externes Anfahrelement, insbesondere nach Anspruch 10, anordbar ist, wobei die Antriebswelle (1) fest mit der Kurbelwelle des Motors verbunden ist.

12. Mehrstufengetriebe nach einem der vorstehenden Ansprüche, **dadurch gekennzeichnet, dass** das Anfahren mittels eines Schaltelements des Getriebes erfolgt, wobei die Antriebswelle (1) ständig mit der Kurbelwelle des Motors verbunden ist.

13. Mehrstufengetriebe nach Anspruch 12, **dadurch gekennzeichnet, dass** als Schaltelement die zweite Bremse (04) einsetzbar ist.

14. Mehrstufengetriebe nach einem der vorstehenden Ansprüche, **dadurch gekennzeichnet, dass** zwischen Motor und Getriebe ein Torsionsschwingungsdämpfer anordbar ist.

15. Mehrstufengetriebe nach einem der vorstehenden Ansprüche, **dadurch gekennzeichnet, dass** auf jeder Welle eine verschleißfreie Bremse anordbar ist.

16. Mehrstufengetriebe nach einem der vorstehenden Ansprüche, **dadurch gekennzeichnet, dass** zum Antrieb von zusätzlichen Aggregaten auf jeder Welle ein Nebenabtrieb anordbar ist.

17. Mehrstufengetriebe nach Anspruch 16, **dadurch gekennzeichnet, dass** der Nebenabtrieb auf der Antriebswelle (1) oder der Abtriebswelle (2) anordbar ist.

18. Mehrstufengetriebe nach einem der vorstehenden Ansprüche, **dadurch gekennzeichnet, dass** die Schaltelemente als lastschaltende Kupplungen oder Bremsen ausgebildet sind.

19. Mehrstufengetriebe nach Anspruch 18, **dadurch gekennzeichnet, dass** Lamellenkupplungen, Bandbremse und/oder Konuskupplungen einsetzbar sind.

20. Mehrstufengetriebe nach einem der Ansprüche 1 bis 17, **dadurch gekennzeichnet, dass** als Schaltelemente formschlüssige Bremsen und/oder Kupplungen vorgesehen sind.

21. Mehrstufengetriebe nach einem der vorstehenden Ansprüche, **dadurch gekennzeichnet, dass** auf jeder Welle als Generator und/oder als zusätzliche Antriebsmaschine eine elektrische Maschine anbringbar ist.

## Claims

1. Multistage transmission in planetary design, in particular an automatic transmission for a motor vehicle, including an input shaft (1) and an output shaft (2), which are arranged in a housing (G), three single-web planetary sets (P1, P2, P3), at least seven turnable shafts (1, 2, 3, 4, 5,6,7), and at least six shifting components (03, 04, 14, 36, 56, 57), including brakes and clutches whose selective engagements bring about various ratios between the input shaft 1) and the output shaft (2), so that eight forward speeds and two reverse speeds can be realized, propulsion is effected by a first shaft (1) permanently linked to an element of the first planetary set, output is effected by a second shaft (2) permanently linked to the internal gear of the third planetary set (P3), that a third shaft (3) is permanently linked to a second element of the first planetary set (P1), that a fourth shaft (4) is permanently linked to the web of the second planetary set (P2), that a fifth shaft (5) is permanently linked to the internal gear of the first planetary set (P1), that a sixth shaft (6) is permanently linked to the sun gear of the second planetary set (P2), that a seventh shaft (7) is permanently linked to the sun gear of the third planetary set (P3), a clutch (14) releasably links the first shaft (1) and the fourth shaft (4), a clutch (36) releasably links the third shaft (3) and the sixth shaft (6), and with a clutch (57) releasably linking the fifth shaft (5) and the seventh shaft (7), **characterized in that** the second shaft is permanently linked to the internal gear of the second planetary set (P2), the fourth shaft is permanently linked to the web of the third planetary set (P3), with the third shaft (3) being connectable to the housing (G) by a brake (03), the fourth shaft (4) being connectable to the housing (G) by a second brake (04), and with a clutch (56) undoably connecting the fifth shaft (5) and the sixth shaft (6)

2. Multistage transmission according to claim 1, **characterized in that** the first shaft (1) is permanently linked to the sun gear of the first planetary set (P1) and that the third shaft (3) is permanently linked to the web of the first planetary set (P1).

3. Multistage transmission according to claim 1, **characterized in that** the first shaft (1) is permanently linked to the web of the first planetary set (P1) and that the third shaft (3) is permanently linked to the sun gear of the first planetary set (P1).

4. Multistage transmission according to one of the preceding claims, **characterized in that** the first planetary set (P1) and the third planetary set (P3) are designed as plus planetary sets and that the second planetary set (P2) is designed as minus planetary set.

5. Multistage transmission according to one of the preceding claims, **characterized in that** additional sprag clutches can be used in any suitable place.

6. Multistage transmission according to claim 5, **characterized in that** the sprag clutches are provided between the shafts (1, 3, 3, 4, 5, 6, 7) and the housing (G).

7. Multistage transmission according to one of the preceding claims, **characterized in that** input and output are provided on the same side of the housing.

8. Multistage transmission according to one of the preceding claims, **characterized in that** an axle differential and/or a center differential is/are arranged on the input side or the output side.

9. Multistage transmission according to one of the preceding claims, **characterized in that** the input shaft (1) can be separated from a propelling engine by a clutch element.

10. Multistage transmission according to claim 9, **characterized in that** the clutch element can be a hydrodynamic converter, a hydraulic clutch, a dry starting clutch, a wet starting dutch, a magnetic powder dutch, or a centrifugal dutch.

11. Multistage transmission according to one of the preceding claims, **characterized in that** an external starting element, in particular one according to claim 10, can be arranged in the direction of power flow behind the transmission, with the input shaft (1) being firmly linked to the crank shaft of the engine.

12. Multistage transmission according to one of the preceding claims, **characterized in that** starting is performed by means of a shifting component of the transmission, with the input shaft (1) being permanently linked to the crankshaft of the engine.

13. Multistage transmission according to claim 12, **characterized in that** the second brake (04) can be used as shifting component.

14. Multistage transmission according to one of the preceding claims, **characterized in that** a torsional-vibration damper can be arranged between engine and transmission.

15. Multistage transmission according to one of the preceding claims, **characterized in that** a nonwearing brake can be arranged on each shaft.

16. Multistage transmission according to one of the preceding claims, **characterized in that** a PTO can be arranged on each shaft to drive additional units.

17. Multistage transmission according to claim 16, **characterized in that** the PTO can be arranged on the input shaft (1) or the output shaft(2).

18. Multistage transmission according to one of the preceding claims, **characterized in that** the shifting components are designed as powershift clutches or brakes.

19. Multistage transmission according to claim 18, **characterized in that** multidisk clutches, band brakes and/or cone clutches can be used.

20. Multistage transmission according to one of the claims 1 thru 17, **characterized in that** positive brakes and/or clutches are provided as shifting components.

21. Multistage transmission according to one of the preceding claims, **characterized in that** an electric machine can be provided on each shaft as generator and/or extra drive machine.

## Revendications

1. Transmission multivitesses à trains épicycloïdaux, en particulier une transmission automatique pour un véhicule automobile, comportant un arbre d'entrée (1) et un arbre de sortie (2) disposés dans un carter (G), trois trains planétaires à arbre porte-satellites (P1, P2, P3), au moins sept arbres rotatifs (1, 2, 3, 4, 5,6,7) ainsi que au moins six éléments de commande (03, 04, 14, 36, 56, 57), comprenant des freins et des embrayages, dont l'engagement sélectif détermine différents rapports de démultiplication entre l'arbre d'entrée (1) et l'arbre de sortie (2), de manière à ce que soient réalisables huit vitesses en marche avant et deux vitesses de marche arriére, l'entraînement s'effectuant par un premier arbre (1), celui-ci étant lié en permanence à un élément du premier train planétaire (P1), la sortie s'effectuant par un deuxième arbre (2), celui-ci étant lié en permanence à la couronne du troisième train planétaire (P3), en ce que un troisième arbre (3) est lié en permanence au deuxième élément du premier train planétaire (P1), en ce que un quatrième arbre (4) est lié en permanence à l'arbre porte-satellites du deuxième train planétaire (P2), en ce que un cinquième arbre (5) est lié en permanence à la couronne du premier train planétaire (P1), en ce que un sixième arbre (6) est lié en permanence au planétaire du deuxième train planétaire (P2), en ce que un septième arbre (7) est lié en permanence au planétaire du troisième train planétaire (P3), en ce que un embrayage (14) relie le premier arbre (1) et le quatrième arbre (4) de façon découplable l'un à l'autre, en ce que un embrayage (36) relie le troisième arbre (3) et le sixième arbre (6) de façon découplable l'un à l'autre et sachant qu'un embrayage (57) relie le cinquième arbre (5) et le septième arbre (7) de façon découplable l'un à l'autre, **caractérisée en ce que** le deuxième arbre est lié en permanence à la couronne du deuxième train planétaire (P2), que le quatrième arbre est lié en permanence à l'arbre porte-satellites du troisième train planétaire (P3), sachant que le troisième arbre (3) peut être couplé au carter (G) par un frein (03), le quatrième arbre (4) peut être couplé au carter par un deuxième frein (04) et un embrayage (56) lie de façon découplable le cinquième arbre (5) et le sixième arbre (6) l'un à l'autre.

2. Transmission multivitesses selon la revendication 1, **caractérisée en ce que** le premier arbre (1) est lié en permanence au planétaire du premier train planétaire (P1) et **en ce que** le troisième arbre (3) est lié en permanence à l'arbre porte-satellites du premier train planétaire (P1).

3. Transmission multivitesses selon la revendication 1, **caractérisée en ce que** le premier arbre (1) est lié en permanence à l'arbre porte-satellites du premier train planétaire (P1) et **en ce que** le troisième arbre (3) est lié en permanence au planétaire du premier train planétaire (P1).

4. Transmission multivitesses selon une des revendications précédentes, **caractérisée en ce que** le premier train planétaire (P1) et le troisième train planétaire (P3) sont réalisés comme trains planétaires positifs et **en ce que** le deuxième train planétaire (P2) est réalisé comme train planétaire négatif.

5. Transmission multivitesses selon une des revendications précédentes, **caract érisée en ce que** dans chaque emplacement possible peuvent être montées des roues libres supplémentaires.

6. Transmission multivitesses selon la revendication 5, **caractérisée en ce que** les roues libres sont prévues entre les arbres (1, 2, 3, 4, 5, 6, 7) et le carter (G).

7. Transmission multivitesses selon une des revendications précédentes, **caract érisée en ce que** l'entrée et la sortie sont prévues du même côté du carter.

8. Transmission multivitesses selon une des revendications précédentes, **caract érisée en que** un différentiel de pont et/ou un différentiel de transfert sont disposés du côté entrée ou du côté sortie.

9. Transmission multivitesses selon une des revendications précédentes, **caract érisée en que** l'arbre d'entrée (1) peut être séparé d'un moteur d'entraînement au moyen d'un élément d'accouplement.

10. Transmission multivitesses selon la revendication 9, **caractérisée en que** en tant qu'élément d'accouplement est prévu un convertisseur de couple hydrodynamique, un coupleur hydraulique, un embrayage de démarrage à sec, un embrayage de démarrage en bain d'huile, un embrayage à poudre magnétique ou un embrayage centrifuge.

11. Transmission multivitesses selon une des revendications précédentes, **caract érisée en que** dans le sens de la chaîne cinématique et en aval de la boîte de vitesses peut être disposé, en particulier selon la revendication 10, un organe de démarrage externe, sachant que l'arbre d'entrée (1) est monté de manière solidaire sur le vilebrequin du moteur.

12. Transmission multivitesses selon une des revendications précédentes, **caract érisée en que** le démarrage s'effectue au moyen d'un élément de commande de la boîte de vitesses, sachant que l'arbre d'entrée (1) est relié en permanence au vilebrequin du moteur.

13. Transmission multivitesses selon la revendication 12, **caractérisée en que** en tant qu'élément de commande peut être utilisé le deuxième frein (04).

14. Transmission multivitesses selon une des revendications précédentes, **caract érisée en que** entre le moteur et la boîte de vitesses peut être disposé un amortisseur de vibrations torsionnelles.

15. Transmission multivitesses selon une des revendications précédentes, **caract érisée en que** sur chaque arbre peut être disposé un frein sans usure.

16. Transmission multivitesses selon une des revendications précédentes, **caract érisée en que** sur chaque arbre peut être disposé une prise de mouvement pour l'entraînement d'organes supplémentaires.

17. Transmission multivitesses selon la revendication 16, **caractérisée en que** la prise de mouvement peut être disposé sur l'arbre d'entrée (1) ou sur l'arbre de sortie (2).

18. Transmission multivitesses selon une des revendications précédentes, **caract érisée en ce que** les éléments de commande sont réalisés en tant qu'embrayages ou freins couplables sous charge.

19. Transmission multivitesses selon la revendication 18, **caractérisée en que** peuvent être utilisés des embrayages à disques, des freins à ruban et/ou des embrayages à cône.

20. Transmission multivitesses selon une des revendications 1 à 17, **caractéris ée en ce que** en tant qu'éléments de commande sont prévus des freins et/ou des embrayages à commande mécanique.

21. Transmission multivitesses selon une des revendications précédentes, **caract érisée en ce que**, en tant que générateur et/ou machine motrice supplémentaire sur chaque arbre peut être monté une machine électrique.
